# EUROPÄISCHE PATENTANMELDUNG

(11) **EP 1 688 050 A1**
(43) Veröffentlichungstag der Anmeldung: **09.08.2006**
(21) Anmeldenummer: 05002252.4
(22) Anmeldetag: 03.02.2005
(51) Int. Cl.: A23L 1/304, A23L 1/302, A23L 1/30, A23L 1/03, A23K 1/175, A23K 1/16, A23K 1/00

(54) **Verfahren zur Herstellung eines für Menschen und Tiere geeigneten, Vitamine, Mineralien und Spurenelemente enthaltenden Konzentrats, durch dieses Verfahren hergestelltes Produkt und seine Verwendung**

(71) Anmelder: ROM Holding AG, 9490 Vaduz (LI)
(72) Erfinder: Borer, Urs P., 6330 Cham (CH)
(74) Vertreter: Adam, Holger

(57) **Zusammenfassung**

Die vorliegende Erfindung betrifft ein Verfahren zur Herstellung eines für Menschen und Tiere geeigneten Konzentrats in Flocken- oder Pulverform, das aufgeschlossene und organisch gebundene Vitamine, Mineralien und Spurenelementen enthält, ein durch dieses Verfahren hergestelltes Produkt und seine Verwendung. Das erfindungsgemäße Verfahren umfasst dabei die folgenden Stufen:
(a) Vermischen fester und flüssiger Nachprodukte der Lebensmittel-, Genussmittel- und Futtermittelindustrie oder Mischungen solcher Produkte mit einem pH-Wert unter 4,0 mit organischen Nachprodukten der Lebensmittel-, Genussmittel- und Futtermittelindustrie oder Mischungen solcher Produkte mit einem pH-Wert im Bereich von 5,0 bis 6,0 in geeigneten Anteilsmengen;
(b) Zugabe natürlich vorkommender Mineralien jeglicher Art mit einem pH-Wert von über 8,5 in geeigneten Anteilsmengen;
(c) Zusatz eines Gemisches aus flüssiger Hefe mit lebenden Zellen und pflanzlichen Ölen nach Ablauf einer Reaktionszeit;
(d) Trocknung des erhaltenen pastenförmigen Produktes auf die gewünschte oder vorgeschriebene Restfeuchte;
(e) Zugabe einer gekapselten Mischung von Vitaminen und Spurenelementen in fester oder flüssiger Form; und
(f) Bindung des in Stufe (e) erhaltenen Produktgemisches mit einer Lösung, die natürliche Aromen, lebende Bakterien und Enzyme umfasst, unter Erhalt des Konzentrats.

Das durch das erfindungsgemäße Verfahren hergestellte, für Menschen und Tiere geeignete, Vitamine, Mineralien und Spurenelemente enthaltende Konzentrat ist zur Verwendung als Nahrungs- oder Futtermittel oder Ergänzungszusatz dafür geeignet.

## Beschreibung

Die vorliegende Erfindung betrifft ein Verfahren zur Herstellung eines für Menschen und Tiere geeigneten Konzentrats, das aufgeschlossene und organisch gebundene Vitamine, Mineralien und Spurenelemente enthält, ein durch dieses Verfahren hergestelltes Produkt und seine Verwendung als Nahrungs- oder Futtermittel oder Ergänzungszusatz dafür.

Nahrungs- und Futtermittel sind Träger der sogenannten Nährstoffe, die der menschliche und tierische Körper zum Aufbau und zur Erhaltung benötigt. Diese Nährstoffe sind die eigentlich wesentlichen Bestandteile der Ernährung, ihr Vorliegen in geeigneter Form und Menge macht eine vollwertige und gesunderhaltende Ernährung aus.

Nährstoffe sind gemäß ihrer Aufgabe in drei Gruppen unterteilt:
(a) Energielieferanten wie Fette und Kohlenhydrate;
(b) Aufbaustoffe zum Aufbau neuer Körpersubstanz, insbesondere während des Wachstums, z. B. Eiweiße und die meisten Mineralstoffe; und
(c) Ergänzungs- und Regierstoffe zur Aufrechterhaltung des Stoffwechsels, wie Vitamine, Mineralstoffe (Tagesbedarf im Grammbereich) und Spurenelemente (Tagesbedarf im Bereich von µg bis mg).

Die in den Grundnahrungsmitteln von Mensch und Tier enthaltenen Mengen an Vitaminen, Mineralien und Spurenelementen sind weltweit rückläufig und können den Bedarf an diesen wichtigen Mikronährstoffen nicht mehr oder nur zu einem kleinen Teil decken.

Ein zu niedrige Menge an Vitaminen, Mineralien und Spurenelementen, die dem Körper zur Verfügung steht, führt bei Mensch und Tier zu Mangelerscheinungen. Sie müssen daher gegebenenfalls den Nahrungs- und Futtermitteln als Nahrungsmittelergänzungszusätze bzw. Ergänzungspräparate zugefügt werden.

Im Stand der Technik sind für Menschen und Tiere geeignete, Spurenelemente enthaltende Konzentrate sowie Verfahren zu ihrer Herstellung bekannt.

Beispielsweise beschreibt die EP 0 052 152 ein Verfahren zur Herstellung eines derartigen Konzentrats, in dem zu sauren, flüssigen Nachprodukten der Milchverarbeitung mit einem Gehalt von über 9 % Asche in der Trockensubstanz und einem pH-Wert unter 5,5 Pflanzenasche und/oder anorganische Bestandteile enthaltende Kohlerückstände in einer solchen Menge zugegeben werden, die ausreicht, den pH-Wert auf einen Wert über 6 zu erhöhen, gegebenenfalls Spurenelemente und/oder Mineralstoffe zugesetzt werden, das angereicherte flüssige oder pastenförmige Produkt getrocknet und gegebenenfalls gemahlen oder granuliert wird. Allerdings besitzt das Verfahren den Nachteil, dass die für das Verfahren eingesetzten Anlagen einem hohen Verschleiß unterworfen sind. Darüber hinaus ist die Akzeptanz des erhaltenen Produkts bei der Verabreichung nicht immer in gewünschtem Umfang gegeben.

Ferner offenbart die EP 0 486 961 ein Verfahren zur Herstellung eines für Menschen und Tiere geeigneten, Spurenelemente enthaltenden Konzentrats, in dem zu flüssigen Nebenprodukten der Lebensmittelindustrie, der Futtermittelindustrie oder der Tierkörperverarbeitungsindustrie, die einen pH-Wert von unter 5,5 aufweisen, als Chelatbildner Flug- oder Pflanzenasche oder ein Gemisch von diesen in einer Menge zugesetzt wird, die ausreicht, den pH-Wert zu erhöhen. Dem flüssigen Gemisch aus Chelatbildner und Flugasche werden flüssige Hefe oder Hefeflüssigkeiten oder deren Gemische zugegeben. Das erhaltene flüssige oder pastenförmige Produkt wird schließlich über Walzen oder einen Turm bis zu einer Restfeuchte getrocknet und gegebenenfalls in an sich bekannter Weise durch Mahlen oder Granulieren zerkleinert, wobei die Reihenfolge der Stufen beliebig sein kann.

In diesem Dokument werden eingehend in dem Verfahren einsetzbare feste und flüssige Rohstoffe genannt, die nach neuesten wissenschaftlichen Erkenntnissen katalytisch an der Zerstörung bzw. der Verringerung des Anteils vieler, dem Produkt zugesetzter, wertvoller Stoffe beteiligt sind. Dadurch stehen diese Stoffe dem Organismus nicht mehr oder nur in sehr geringem Maß zur Verfügung. Solche Stoffe sind vor allem Aromastoffe und andere organische Stoffe, einzelne, in das Produkt eingebrachte Vitamine und Spurenelemente sowie lebende Bakterien und Enzyme, die vor allem die biologische Verfügbarkeit des Endprodukts, d. h. das Verhältnis zwischen dem ins Blut aufgenommenen und dem ausgeschiedenen Anteil, beeinflussen. Dadurch werden die theoretisch mögliche Resorption und biologische Verfügbarkeit solcher Stoffe praktisch bei weitem nicht erreicht.

Da die genannten und andere Verfahren des Stands der Technik die wechselseitigen katalytischen Wirkungen der verwendeten Rohstoffe nicht berücksichtigen, werden die Anzahl und die Menge der biologisch verfügbaren und erwünschten Stoffe in erheblichem Maße reduziert. Die Stoffe sind häufig zwar noch analytisch nachweisbar, für den Organismus sind derartige Mengen jedoch meist wertlos.
Die Ergänzungspräparate des Standes der Technik haben auf Grund der darin verwendeten, nicht pflanzenähnlichen Form der in den Präparaten enthaltenen Vitamine, Mineralien und Spurenelemente einen sehr schlechten Wirkungsgrad. Die wertvollen Mikronährstoffe werden grösstenteils wieder ausgeschieden, weil der Verdauungstrakt zu wenig Zeit hat, diese relativ rohen Mikronährstoffe dem Organismus über die Magensäure zur Verfügung zu stellen. Das bekannteste Beispiel hierfür ist das Magnesium.

Der vorliegenden Erfindung liegt also die Aufgabe zugrunde, ein Verfahren zur Herstellung von Konzentraten zur Verfügung zu stellen, die aufgeschlossene und organisch gebundene Vitamine, Mineralien und Spurenelemente enthalten. Dabei soll der Gehalt der Vitamine, Mineralien und Spurenelemente, die in den in dem Verfahren eingesetzten Rohstoffen enthalten sind bzw. im Verlauf des Verfahrens zugesetzt werden, zu einem möglichst hohen Anteil im Konzentrat erhalten bleiben und nach der Verabreichung dem jeweiligen Organismus zur Verfügung stehen. Darüber hinaus soll das durch das Verfahren erhaltene Konzentrat zur Verwendung als Nahrungs- oder Futtermittel oder Ergänzungszusatz dafür geeignet sein und eine hohe Akzeptanz bei der Verabreichung finden.

Bei der Erprobung verschiedener Verfahren zur Herstellung von Mineralien und Spurenelemente enthaltenden Konzentraten ist überraschenderweise festgestellt worden, dass die nachträgliche Zugabe einer gekapselten Mischung aus Vitaminen und Spurenelementen in fester oder flüssiger Form zu einem Gemisch aus geeigneten Nachprodukten der Lebensmittel-, Genussmittel- und Futtermittelindustrie, natürlich vorkommenden Mineralien, flüssiger Hefe und pflanzlichen Ölen sowie die Bindung des auf diese Weise erhaltenen Produktgemisches mit einer speziellen Lösung, die natürliche Aromen, lebende Bakterien und Enzyme enthält, ein Konzentrat hergestellt werden kann, das einen erhöhten Gehalt an Vitaminen, Mineralien und Spurenelementen besitzt, die darüber hinaus in erhöhtem Maße biologisch verfügbar sind.

Dazu werden gemäß dem Verfahren der vorliegenden Erfindung natürliche Säuren in einem Reaktionsmischer mit diesen Mikronährstoffen zusammengebracht und ihnen wird die notwendige Zeit zur Aufspaltung dieser Stoffe ("Vorverdauung") zur Verfügung gestellt. Durch diese Vorverdauung wird der Wirkungsgrad der erfindungsgemäßen Nahrungsergänzungsprodukte bzgl. der Resorption aller darin enthaltenen Vitamine, Mineralien und Spurenelemente in den Organismus gegenüber herkömmlichen Nahrungsergänzungsprodukten mehr als verdoppelt.

Die der Erfindung zugrunde liegende Aufgabe wird durch ein Verfahren nach einem der Ansprüche 1 bis 11, das Konzentrat nach Anspruch 12 und die Verwendung nach Anspruch 13 gelöst.

Das erfindungsgemäße Verfahren zur Herstellung eines für Menschen und Tiere geeigneten Konzentrats, das aufgeschlossene und organisch gebundene Vitamine, Mineralien und Spurenelemente enthält, umfasst die folgenden Stufen:
(a) Vermischen fester und flüssiger Nachprodukte der Lebensmittel-, Genussmittel- und Futtermittelindustrie oder Mischungen solcher Produkte mit einem pH-Wert unter 4,0 mit organischen Nachprodukten der Lebensmittel-, Genussmittel- und Futtermittelindustrie oder Mischungen solcher Produkte mit einem pH-Wert im Bereich von 5,0 bis 6,0 in geeigneten Anteilsmengen;
(b) Zugabe natürlich vorkommender Mineralien jeglicher Art mit einem pH-Wert von über 8,5 in geeigneten Anteilsmengen;
(c) Zusatz eines Gemisches aus flüssiger Hefe mit lebenden Zellen und pflanzlichen Ölen nach Ablauf einer Reaktionszeit von (a) und (b);
(d) Trocknung des erhaltenen pastenförmigen Produktes auf die gewünschte oder vorgeschriebene Restfeuchte;
(e) Zugabe einer gekapselten Mischung von Vitaminen und Spurenelementen in fester oder flüssiger Form; und
(f) Bindung des in Stufe (e) erhaltenen Produktgemisches mit einer Lösung, die natürliche Aromen, lebende Bakterien und Enzyme umfasst, unter Erhalt des Konzentrats.

Nach dem erfindungsgemäßen Verfahren werden zunächst in Stufe (a) feste und flüssige Nachprodukte der Lebensmittel-, Genussmittel- und Futtermittelindustrie oder Mischungen solcher Produkte mit einem pH-Wert unter 4,0 mit organischen Nachprodukten der Lebensmittel-, Genussmittel- und Futtermittelindustrie oder Mischungen solcher Produkte mit einem pH-Wert im Bereich von 5,0 bis 6,0 in geeigneten Anteilsmengen auf herkömmliche Weise miteinander vermischt. Der Begriff Nachprodukt, wie er hierin verwendet wird, bezeichnet Nachprodukte, Nebenprodukte, Abfallprodukte und Entsorgungsprodukte der Lebensmittel-, Genussmittel- und Futtermittelindustrie, wobei die Tierkörperverarbeitungsindustrie ausgenommen ist. Die jeweiligen Anteilsmengen ergeben sich, wie die nachstehend angegebenen Rezeptvarianten zeigen, aus den gewünschten Gehalten der Mineralien im Endprodukt und können vom Fachmann leicht bestimmt werden. Bevorzugt liegt das Gewichtsverhältnis der Produkte mit pH < 4 zu den Produkten mit einem pH-Wert im Bereich von 5,0 bis 6,0 dabei jedoch in einem Bereich von 2:1 bis 1:6, stärker bevorzugt in einem Bereich von 1,5:1 bis 1:4. Das erhaltene Gemisch dient als Reaktionsmittel, Chelatbildner, Trägersubstanz und Lieferant für wertvolle Aromen und Spurenelemente.

Das Vermischen wird in einer herkömmlichen Mischapparatur, z. B. einem Reaktionsmischer, einem Trommelmischer, einem Banbury-Mischer, einem Taumelmischer und dergleichen, durchgeführt. Besonders bevorzugt ist die Verwendung eines Reaktionsmischers mit wenig Einbauten und einem Nutzvolumen von 4 m³ bis 12 m³, vorzugsweise 6 m³, der auch die Aufgabe hat, Sedimentationen zu verhindern, und dessen Drehzahl über einen weiten Bereich (1 bis 25 U/min) regelbar ist. Das Vermischen erfolgt bei einer Temperatur von im Allgemeinen 8°C bis 35°C, bevorzugt 21 °C bis 28°C und stärker bevorzugt etwa 25°C über einen Zeitraum von 0,5 bis 2 Stunden, bevorzugt von 0,5 bis zu 1 Stunden.

Danach werden dem resultierenden Gemisch in Stufe (b) natürlich vorkommende Mineralien jeglicher Art, sofern ihr pH-Wert höher als 8,5 ist, in geeigneten Anteilsmengen unter Zugabe von Wasser zugesetzt. Bevorzugte Mineralien können beispielweise alle Calciumverbindungen (Dolomit, Kreide etc.), alle MagnesiumVerbindungen, sehr fein gemahlene Natursteinarten, Siliciumverbindungen, Kalium-und Zinkverbindungen und dergleichen sein, sind jedoch nicht auf diese beschränkt.

Die Mineralien werden in einer Anteilsmenge zugegeben, die sich nach ihrem gewünschten Gehalt im Endprodukt richtet. Im Allgemeinen beträgt die Anteilsmenge 40 Gew.-% bis 70 Gew.-%, bevorzugt 49 Gew.-% bis 65 Gew.-% und bevorzugter 50 Gew.-% bis 59 Gew.-%, jeweils bezogen auf die Menge des Gemisches aus Stufe (a) als 100 Gew.-%.

Der Zusatz dieser Mineralien führt dazu, dass eine biochemische Reaktion unter Kohlensäureentwicklung und Schaumbildung in dem Mischer abläuft, die zu einer Aufspaltung dieser Mineralien durch das saure Produkt aus Stufe (a) in dem Mischer führt. Darüber hinaus bewirkt die Reaktion eine chemische Bindung der Rohstoffe untereinander. Dazu sind Temperaturen von im Allgemeinen 10°C bis 50°C, vorzugsweise 20°C bis 40°C und besonders bevorzugt etwa 35°C sowie Reaktionszeiten von 5 Stunden bis 10 Stunden, vorzugsweise von 7 Stunden bis 9 Stunden, bevorzugter etwa 8 Stunden erforderlich.

Diese Verfahrenweise ermöglicht einen hohen Gehalt an Mineralien (z. B. Ca, P, Mg, Na) im Endprodukt.

Nach Ablauf der Reaktionszeit wird das Gemisch aus Stufe (b) in Stufe (c) mit einem Gemisch aus flüssiger Hefe mit lebenden Zellen und pflanzlichen Ölen in geeigneten Anteilsmengen versetzt. Erfindungsgemäß kann eine beliebige flüssige Hefe mit lebenden Zellen eingesetzt werden. Vorzugsweise wird jedoch eine in Fermentations-und Gärungsbetrieben anfallende Hefesuspension eingesetzt, die nicht unter 9 Gew.-% Hefe in der Trockenmasse enthalten sollte, wobei eine untergärige Hefe am stärksten bevorzugt ist.

Beispiele der pflanzlichen Öle beinhalten Maisöl, Rapsöl, Leinsamenöl, Rizinusöl, Sonnenblumenöl, Sojaöl, Safloröl, Baumwollsamenöl und dergleichen, sind jedoch nicht auf diese beschränkt. Das Öl ist in dem Gemisch in einer Anteilsmenge von 1 Gew.-% bis 4 Gew.-%, bevorzugt 1 Gew.-% bis 2 Gew.-% enthalten.

Das hefeenthaltende Gemisch wird bei einer Temperatur bis 45°C, bevorzugt 35°C bis 40°C beigemischt. Nach der Zugabe des hefeenthaltenden Gemisches sollte eine Temperatur von 45°C während eines Zeitraums von 1 bis 3 Stunden, vorzugsweise etwa 2 Stunden nicht mehr überschritten werden.

Die zuzusetzende Anteilsmenge des hefeenthaltenden Gemisches beträgt im Allgemeinen 4 Gew.-% bis 19 Gew.-%, bevorzugt 6 Gew.-% bis 15 Gew.-% und bevorzugter 8 Gew.-% bis 13 Gew.%, jeweils bezogen auf die Gesamtmenge des in Stufe (b) erhaltenen Gemisches als 100 Gew.-%.

Nachfolgend wird das erhaltene pastenförmige, konzentrierte Produkt in Stufe (d) durch ein im Stand der Technik bekanntes Trocknungsverfahren bei einer Temperatur bis maximal 175°C, bevorzugt 70°C bis 90°C auf eine gewünschte oder vorgeschriebene Restfeuchte, die im Allgemeinen bei 4 % bis 12 %, vorzugsweise bei 6 % bis 9 %, bevorzugter bei etwa 8 % liegt, gegebenenfalls unter Anlegen eines Unterdrucks getrocknet.

Im Verlauf dieser Stufe kann das Produkt auf an sich bekannte Art und Weise in seine gewünschte Form gebracht und sterilisiert werden. Bevorzugte Formen können dabei Pulver, Flocken, Pellets, Granulate, zähflüssige Sirups und dergleichen sein, sind jedoch nicht auf diese beschränkt.

Anschließend wird das Produkt aus Stufe (d) in Stufe (e) mit verschiedenen, speziell gekapselten Mischungen von Vitaminen und Spurenelementen in fester oder flüssiger Form in gewünschten Anteilsmengen versetzt. Mengen und Zusammensetzungen der Vitamine und Spurenelemente sind dem Fachmann bekannt, es können auch Derivate davon, die nach Verabreichung die Vitamine und Spurenelemente freisetzen, eingesetzt werden.

Die folgende Aufstellung zeigt eine Auswahl an Vitaminen und Spurenelementen, die in der vorliegenden Erfindung eingesetzt werden können, sowie die entsprechenden Mengen im Endprodukt:

| Wirkstoff | Dosierung | |
|---|---|---|
| | *pro kg* | *Endprodukt* |
| Vitamin A | 1.000.000 | IE |
| Vitamin D3 | 180.000 | IE |
| Vitamin E | 5.000 | IE |
| Vitamin B1 | 500 | mg |
| Vitamin B2 | 375 | mg |
| Vitamin B6 | 250 | mg |
| Folsäure | 50 | mg |
| Vitamin C | 3.000 | mg |
| Vitamin K3 | 150 | mg |
| Vitamin B12 | 2 | mg |
| Calciumpantothenat | 1.000 | mg |
| Nikotinsäure | 750 | mg |
| Biotin (Vitamin H) | 10 | mg |
| Selen | 20 | mg |

Bei den angebenenen Mengen handelt es sich um Richtwerte, von denen in Abhängigkeit der Verwendung bis zu einem Mehrfachen der Richtwerte abgewichen werden kann.

Die Spurenelementsupplementierung erfolgt in Abhängigkeit des nativen Gehaltes der verwendeten Rohstoffe in der Mischung und kann in jedem Fall rezepturspezifisch vom Fachmann festgelegt werden.

Die Kapselung der zugegebenen Vitamine und Spurenelemente kann in Form einer Protein-, Kohlenhydrat- oder Fettumhüllung bestehen. Diese ist vorzugsweise pansenstabil, was wichtig für Wiederkäuer ist, löst sich aber im weiteren Verdauungstrakt auf und gibt die Wirkstoffe erst im Dünndarm zur Absorption frei.

Die gekapselte Vitaminmischung wird vorzugsweise in einer Menge von 3 bis 5 Gew.-%, bevorzugter 4 Gew.-%, bezogen auf die Menge des in Stufe (d) erhaltenen Gemisches, eingesetzt.

Abschließend wird das in Stufe (e) erhaltene Produkt in Stufe (f) mit 0,5 bis 2,0 % vorzugsweise etwa 1,0 %, bezogen auf das Endprodukt, mit einer speziellen Lösung behandelt (versetzt), damit das in der Stufe (e) zugegebene Produkt angebunden wird, was schließlich zum Erhalt des Endprodukts führt.

Das Endprodukt kann dabei in Form von Pulvern, Flocken, Pellets, Granulaten, zähflüssigen Sirups und dergleichen erhalten werden, wobei Flocken- oder Pulverform bevorzugt ist, und findet bei der Verabreichung eine hohe Anwendungsflexibilität und Akzeptanz.

Die spezielle Lösung in Stufe (f) umfasst von 10 Gew.-% bis 25 Gew.-%, bevorzugt 15 Gew.-% bis 20 Gew.-% natürliche Aromen, z. B. Fenchel-, Bockshornsamen, Brennnessel und dergleichen, jeweils in sehr fein gemahlenem Zustand; 20 Gew.-% bis 35 Gew.-%, bevorzugt 25 Gew.-% bis 30 Gew.-% lebende Bakterien, z. B. Lactobazillen und dergleichen; von 5 Gew.-% bis 20 Gew.-%, bevorzugt 10 Gew.-% bis 15 Gew.-% Enzyme, z. B. Bromelain, Hesperidin, Bioflavonoide, Betain und dergleichen; von 15 Gew.-% bis 35 Gew.-%, bevorzugt 20 Gew.-% bis 30 Gew.-% Weizenkeimöl; von 8 Gew.-% bis 15 Gew.-%, bevorzugt 10 Gew.-% bis 13 Gew.-% Emulgator, z. B. Sojalezithin und dergleichen, jeweils bezogen auf die Gesamtmenge der speziellen Lösung als 100 Gew.-%. Als Hauptträgerstoff fungiert stabilisiertes Weizenkeimöl.

Der Zusatz der speziellen Lösung und die biochemischen Reaktion in den Stufen (a) bis (c) bewirkt, dass die im Konzentrat enthaltenen Ergänzungs- und Regierstoffe für die Organismen biologisch um ein Vielfaches besser verwertbar sind.

Je nach gewünschtem Gehalt der Mineralien im Endprodukt kann zwischen den im Folgenden beschriebenen Rezeptvarianten 1 bis 3 unterschieden werden. Darin sind unter dem Begriff "Nachbehandlung" die Stufen (c) bis (f) zusammengefasst; die unter diesem Punkt angegebene Anteilsmenge stellt der daher die Gesamtanteilsmenge der in den Stufen (c), (d) und (f) zugesetzten Komponenten dar.

### Rezeptvariante 1

| Gewünschter Gehalt im Endprodukt: | | |
|---|---|---|
| | Ca | min. 15 Gew.-% |
| | P | min. 7 Gew.-% |
| | Mg | min. 6 Gew.-% |
| | Na | min. 5 Gew.-% |

| Anteile der Komponenten in der Mischung: | | |
|---|---|---|
| | Produkte mit pH < 4 | 18 - 33 Gew.-% |
| | Organische Nachprodukte | 9 - 17 Gew.-% |
| | Mineralien mit pH > 8,5 | 32 - 61 Gew.-% |
| | Nachbehandlung | 9 - 13 Gew.-% |
| | Gekapselte Vitaminmischung | 3 - 5 Gew.-% |

### Rezeptvariante 2

| Gewünschter Gehalt im Endprodukt: | | |
|---|---|---|
| | Ca | max. 1 Gew.-% |
| | P | min. 14 Gew.-% |
| | Mg | min. 14 Gew.-% |
| | Na | min. 5 Gew.-% |

| Anteile der Komponenten in der Mischung: | | |
|---|---|---|
| | Produkte mit pH < 4 | 24 - 69 Gew.-% |
| | Organische Nachprodukte | 11 - 18 Gew.-% |
| | Mineralien mit pH > 8,5 | 6 - 39 Gew.-% |
| | Nachbehandlung | 11-14 Gew.-% |
| | Gekapselte Vitaminmischung | 3 - 5 Gew.-% |

### Rezeptvariante 3

| Gewünschter Gehalt im Endprodukt: | | |
|---|---|---|
| | Ca | min. 15 Gew.-% |
| | P | min. 5 Gew.-% |
| | Mg | min. 17 Gew.-% |
| | Na | min. 5 Gew.-% |

| Anteilsmengen der Komponenten in der Mischung: | | |
|---|---|---|
| | Produkte mit pH < 4 | 15 - 30 Gew.-% |
| | Organische Nachprodukte | 10 - 20 Gew.-% |
| | Mineralien mit pH > 8,5 | 30 - 62 Gew.-% |
| | Nachbehandlung | 10 - 15 Gew.-% |
| | Gekapselte Vitaminmischung | 3 - 5 Gew.-% |

Das erfindungsgemäße Verfahren ist äusserst flexibel und findet bei allen Rezepturen Anwendung; erforderliche Anpassungen an eine spezielle Verwendung können vom Fachmann leicht vorgenommen werden.

Die vorstehend genannte, spezielle Wahl der Reaktions- und Vermischungszeiten sowie der Temperaturen ermöglichen das Erreichen der in den Rezeptvarianten aufgeführten Gehalte der einzelnen Komponenten in den Konzentraten, ohne dass eine Schädigung der Rohkomponenten auftritt, wobei die bereits in den eingesetzten Rohstoffen vorhandenen Mineralien und Spurenelemente weitgehend biologisch erhalten bleiben.

Im Folgenden wird die vorliegende Erfindung unter Bezugnahme auf Beispiele weiter erläutert. Die aufgeführten Beispiele dienen dabei zur Veranschaulichung der Erfindung und sollen nicht als einschränkend aufgefasst werden. Weitere Ausführungsformen der vorliegenden Erfindung sind für den Fachmann leicht zu erkennen. Soweit nichts anderes angegeben ist, beziehen sich Prozentangaben auf das Gewicht (Gew.-%).

### Beispiele:

### 1. Herstellung einer gekapselten Vitaminmischung

Eine je nach Anwendung und Bedarf an Vitaminen und Spurenelementen vom Fachmann nach Rezept zusammengesetzte, separat hergestellte Mischung, wird mit einem Fest-Flüssigmischer entweder mit flüssigen Proteinen, Kohlenhydraten, Aminosäuren und vorzugsweise mit einem nach dem Stand der Technik auf einen Schmelzpunkt von 58 bis 65 Grad Celsius, vorzugsweise auf 60 bis 63 Grad Celsius gehärteten pflanzlichen oder tierischen Fett vermischt.
Auch Mischungen aller erwähnten flüssigen Komponenten sind möglich.
Der Anteil der pulverförmigen Vitamin- und Spurenelementmischung für diese gekapselte Mischung beträgt 40 bis 70 Gew.-%, vorzugsweise 50 bis 60 Gew.-%. Der Rest auf 100 Gew.-% entfällt auf die je nach Anwendungsart geforderte oben erwähnten Flüssigkomponenten.
Durch die Technik dieses Fest-Flüssigmischers werden alle Vitamine und Spurenelemente mit der gewählten Flüssigkomponente kontinnuierlich gemischt und dadurch vollständig umhüllt.
Die so erhaltene Paste wird kontinuierlich einer herkömmlichen Zweistoffdüse zugeführt. Die Temperatur dieser Paste soll 40 bis 70°C, vorzugsweise 50 bis 60°C betragen. Unter Zuhilfenahme von Stickstoff, Pressluft oder eines anderen Gases wird diese Paste am Düsenaustritt der Zweistoffdüse wieder in feinste Teile zerrissen. Der Druck der Gase liegt dabei bei 2 bis 40 bar, besser bei 5 bis 30 bar, vorzugsweise bei 10 bis 20 bar.
Diese feinen Teile werden in einen großen luftdurchlässigen sprühturmähnlichen Raum eingesprüht und durch Zufuhr von Kaltluft kristallisiert.
Die dadurch erhaltene gekapselte Mischung wird ohne weitere Aufarbeitung in den folgenden Beispielen 2 und 3 verwendet.

### 2. Herstellung von Nahrungsergänzungsprodukten

### a) nach Rezeptvariante 1

In einen Reaktionsmischer mit einem Nutzvolumen von 6 m³ werden bei 25°C 1.000 kg bis 2.000 kg flüssige Entsorgungsprodukte der Lebensmittelindustrie (Produkt mit pH < 4) und 600 bis 1000 kg feste Nebenprodukte der Lebensmittelindustrie mit pH 5 bis 6 eingebracht und eine Stunde lang bei derselben Temperatur vermischt. Danach werden über einen Zeitraum von 1 bis 2 Stunden bei einer Temperatur von 35°C 2.000 bis 3.500 kg Produkte mit pH > 8,5, die vorher kontinuierlich in einem Fest-Flüssig-Mischer mit 10 bis 30 Gew.-%, vorzugsweise mit 15 Gew.-% Wasser vermischt worden sind, langsam und kontinuierlich zugegeben. Dabei setzt eine heftige Reaktion ein, die mit Kohlendioxidentwicklung und mit Schaumbildung verbunden ist. Anschließend wird das Gemisch 8 Stunden bei dieser Temperatur dauernd in Bewegung gehalten, was die biochemische Reaktion ermöglicht. Daraufhin werden bei 40°C 600 bis 800 kg eines Gemisches, das 9 Gew.-% flüssige Hefe und 1,5 Gew.-% nach Wahl eines oder mehrerer Pflanzenöle und zum Rest Wasser enthält, zugegeben und das Gemisch wird zur organischen Bindung weitere 2 Stunden bei dieser Temperatur innig vermischt. Das so erhaltene pastenförmige Produkt wird bei einer Temperatur von 80°C und einem Druck von 80 hPa auf eine Restfeuchte von 8 % getrocknet, sterilisiert und in Flockenform gebracht.

Anschließend wird das erhaltene flockenförmige Halbfabrikat kontinuierlich mittels einer Bandwaage in einen Trommelmischer eindosiert. Dann wird zunächst die in Beispiel 1 erhaltene, gekapselte Vitaminmischung in einer Menge von 3 bis 5 Gew.-%, vorzugsweise 4 Gew.-%, bezogen auf die Menge des in den Mischer eingebrachten Halbfabrikates, auch kontinuierlich in den Mischer gegeben. Gleichzeitig wird eine Lösung, die aus 20 Gew-% sehr fein gemahlenem Bockshornsamen, 25 Gew.-% Lactobazillen, 15 Gew.-% Bioflavoniden, 30 Gew.-% Weizenkeimöl und 10 Gew.-% Sojalecithin besteht, in einer Menge von 0,5 bis 2 Gew.-%, vorzugsweise 1 Gew.-%, bezogen auf die Menge des in den Mischer eingebrachten Halbfabrikates, kontinuierlich auf das Halbfabrikat im Mischer aufgesprüht, wodurch das Endprodukt erhalten wird.

### b) nach Rezeptvariante 2

In einen Reaktionsmischer mit einem Nutzvolumen von 6 m³ werden bei 25°C 1.500 bis 4.000 kg flüssige Entsorgungsprodukte der Lebensmittelindustrie mit pH < 4 und 600 bis 1.000 kg feste Nebenprodukte der Lebensmittelindustrie mit pH 5 bis 6 eingebracht und eine Stunde lang bei derselben Temperatur vermischt. Danach werden über einen Zeitraum von 1 bis 2 Stunden bei einer Temperatur von 35°C 400 bis 2.400 kg der Produkte mit pH > 8,5, die vorher kontinuierlich in einem Fest-Flüssig-Mischer mit 10 bis 30 Gew.-%, vorzugsweise mit 15 Gew.-% Wasser vermischt worden sind, langsam und kontinuierlich zugegeben. Dabei setzt eine heftige Reaktion ein, die mit Kohlendioxidentwicklung und mit Schaumbildung verbunden ist. Anschließend wird das Gemisch 8 Stunden bei dieser Temperatur dauernd in Bewegung gehalten, was die biochemische Reaktion ermöglicht. Daraufhin werden bei 40°C 650 bis 900 kg eines Gemisches, das 9 Gew.-% flüssige Hefe und 1,5 Gew.-% nach Wahl eines oder mehrerer Pflanzenöle und zum Rest Wasser enthält, zugegeben und das Gemisch wird zur organischen Bindung weitere 2 Stunden bei dieser Temperatur innig vermischt. Das so erhaltene pastenförmige Produkt wird bei einer Temperatur von 80°C und einem Druck von 80 hPa auf eine Restfeuchte von 8 % getrocknet, sterilisiert und in Flockenform gebracht.

Anschließend wird das erhaltene flockenförmige Halbfabrikat kontinuierlich mittels einer Bandwaage in einen Trommelmischer eindosiert. Dann wird zunächst die in Beispiel 1 erhaltene, gekapselte Vitaminmischung in einer Menge von 3 bis 5 Gew.-%, vorzugsweise 4 Gew.-%, bezogen auf die Menge des in den Mischer eingebrachten Halbfabrikates, auch kontinuierlich in den Mischer gegeben. Gleichzeitig wird eine Lösung, die aus 20 Gew-% sehr fein gemahlenem Bockshornsamen, 25 Gew.-% Lactobazillen, 15 Gew.-% Bioflavoniden, 30 Gew.-% Weizenkeimöl und 10 Gew.-% Sojalecithin besteht, in einer Menge von 0,5 bis 2 Gew.-%, vorzugsweise 1 Gew.-%, bezogen auf die Menge des in den Mischer eingebrachten Halbfabrikates, kontinuierlich auf das Halbfabrikat im Mischer aufgesprüht, wodurch das Endprodukt erhalten wird.

### c) nach Rezeptvariante 3

In einen Reaktionsmischer mit einem Nutzvolumen von 6 m³ werden bei 25°C 900 bis 1.800 kg flüssige Entsorgungsprodukte der Lebensmittelindustrie mit pH < 4 und 600 bis 1.200 kg organische Nebenprodukte der Lebensmittelindustrie mit einem pH von 5 bis 6 eingebracht und eine Stunde lang bei derselben Temperatur vermischt.

Danach werden über einen Zeitraum von 1 bis 2 Stunden bei einer Temperatur von 35°C 1.800 bis 3.800 kg die Produkte mit pH > 8,5, die vorher kontinuierlich in einem Fest-Flüssig-Mischer mit 10 bis 30 Gew.-%, vorzugsweise mit 15 Gew.-% Wasser vermischt worden sind, langsam und kontinuierlich zugegeben. Dabei setzt eine heftige Reaktion ein, die mit Kohlendioxidentwicklung und mit Schaumbildung verbunden ist. Anschließend wird das Gemisch 8 Stunden bei dieser Temperatur dauernd in Bewegung gehalten, was die biochemische Reaktion ermöglicht. Daraufhin werden bei 40°C 650 bis 900 kg eines Gemisches, das 9 Gew.-% flüssige Hefe und 1,5 Gew.-% nach Wahl eines oder mehrerer Pflanzenöle und zum Rest Wasser enthält, zugegeben und das Gemisch wird zur organischen Bindung weitere 2 Stunden bei dieser Temperatur innig vermischt. Das so erhaltene pastenförmige Produkt wird bei einer Temperatur von 80°C und einem Druck von 80 hPa auf eine Restfeuchte von 8 % getrocknet, sterilisiert und in Flockenform gebracht.

Anschließend wird das erhaltene flockenförmige Halbfabrikat kontinuierlich mittels einer Bandwaage in einen Trommelmischer eindosiert. Dann wird zunächst die in Beispiel 1 erhaltene, gekapselte Vitaminmischung in einer Menge von 3 bis 5 Gew.-%, vorzugsweise 4 Gew.-%, bezogen auf die Menge des in den Mischer eingebrachten Halbfabrikates auch kontinuierlich in den Mischer gegeben. Gleichzeitig wird eine Lösung, die aus 20 Gew-% sehr fein gemahlenem Bockshornsamen, 25 Gew.-% Lactobazillen, 15 Gew.-% Bioflavoniden, 30 Gew.-% Weizenkeimöl und 10 Gew.-% Sojalecithin besteht, in einer Menge von 0,5 bis 2 Gew.-%, vorzugsweise 1 Gew.-%, bezogen auf die Menge des in den Mischer eingebrachten Halbfabrikates, kontinuierlich auf das Halbfabrikat im Mischer aufgesprüht, wodurch das Endprodukt erhalten wird.

### 3. Spezielles Ausführungsbeispiel gemäß Rezeptvariante 1

In einen Reaktionsmischer mit einem Nutzvolumen von 6 m³ werden bei 25°C 1.500 kg flüssige Entsorgungsprodukte der Lebensmittelindustrie (Produkt mit pH < 4) und 800 kg feste Nebenprodukte der Lebensmittelindustrie mit pH 5 bis 6 eingebracht und eine Stunde lang bei derselben Temperatur vermischt. Danach werden über einen Zeitraum von 1,5 Stunden bei einer Temperatur von 35°C 2.800 kg Produkte mit pH > 8,5, die vorher kontinuierlich in einem Fest-Flüssig-Mischer mit 15 Gew.-% Wasser vermischt worden sind, langsam und kontinuierlich zugegeben. Dabei setzt eine heftige Reaktion ein, die mit Kohlendioxidentwicklung und mit Schaumbildung verbunden ist. Anschließend wird das Gemisch 8 Stunden bei dieser Temperatur dauernd in Bewegung gehalten, was die biochemische Reaktion ermöglicht. Daraufhin werden bei 40°C 700 kg eines Gemisches, das 9 Gew.-% flüssige Hefe und 1,5 Gew.-% Rapsöl und zum Rest Wasser enthält, zugegeben und das Gemisch wird zur organischen Bindung weitere 2 Stunden bei dieser Temperatur innig vermischt. Das so erhaltene pastenförmige Produkt wird bei einer Temperatur von 80°C und einem Druck von 80 hPa auf eine Restfeuchte von 8 % getrocknet, sterilisiert und in Flockenform gebracht.

Anschließend wird das erhaltene flockenförmige Halbfabrikat kontinuierlich mittels einer Bandwaage in einen Trommelmischer eindosiert. Dann wird zunächst die in Beispiel 1 erhaltene, gekapselte Vitaminmischung in einer Menge 4 Gew.-%, bezogen auf die Menge des in den Mischer eingebrachten Halbfabrikates, auch kontinuierlich in den Mischer gegeben. Gleichzeitig wird eine Lösung, die aus 20 Gew-% sehr fein gemahlenem Bockshornsamen, 25 Gew.-% Lactobazillen, 15 Gew.-% Bioflavoniden, 30 Gew.-% Weizenkeimöl und 10 Gew.-% Sojalecithin besteht, in einer Menge von 1 Gew.-%, bezogen auf die Menge des in den Mischer eingebrachten Halbfabrikates, kontinuierlich auf das Halbfabrikat im Mischer aufgesprüht, wodurch das Endprodukt erhalten wird.

Die gemäß der obigen Beispiele 2a) bis c) und 3 erhaltenen, Vitamine, Mineralien und Spurenelemente enthaltenen Konzentrate zeichnen sich gegenüber bekannten Nahrungsergänzungsprodukten durch einen höheren Gehalt an wirksamen Komponenten sowie durch einen bei weitem erhöhten Wirkungsgrad bzgl. der Resorption der wirksamen Komponenten in den Organismen aus.

## Patentansprüche

1. Verfahren zur Herstellung eines für Menschen und Tiere geeigneten Konzentrats, das aufgeschlossene und organisch gebundene Vitamine, Mineralien und Spurenelementen enthält, wobei das Verfahren die folgenden Stufen umfasst:
(a) Vermischen fester und flüssiger Nachprodukte der Lebensmittel-, Genussmittel- und Futtermittelindustrie oder Mischungen solcher Produkte mit einem pH-Wert unter 4,0 mit organischen Nachprodukten der Lebensmittel-, Genussmittel- und Futtermittelindustrie oder Mischungen solcher Produkte mit einem pH-Wert im Bereich von 5,0 bis 6,0 in geeigneten Anteilsmengen;
(b) Zugabe natürlich vorkommender Mineralien jeglicher Art mit einem pH-Wert von über 8,5 in geeigneten Anteilsmengen;
(c) Zusatz eines Gemisches aus flüssiger Hefe mit lebenden Zellen und pflanzlichen Ölen nach Ablauf einer Reaktionszeit;
(d) Trocknung des erhaltenen pastenförmigen Produktes auf die gewünschte oder vorgeschriebene Restfeuchte;
(e) Zugabe einer gekapselten Mischung von Vitaminen und Spurenelementen in fester oder flüssiger Form; und
(f) Bindung des in Stufe (e) erhaltenen Produktgemisches mit einer Lösung, die natürliche Aromen, lebende Bakterien und Enzyme umfasst, unter Erhalt des Konzentrats.

2. Verfahren nach Anspruch 1, wobei das Gewichtsverhältnis der Produkte mit einem pH-Wert unter 4 zu den Produkten mit einem pH-Wert im Bereich von 5,0 bis 6,0 in einem Bereich von 2:1 bis 1:6 liegt.

3. Verfahren nach einem der voranstehenden Ansprüche, wobei die natürlich vorkommenden Mineralien in Stufe (b) in einer Anteilsmenge von 40 Gew.-% bis 70 Gew.-%, bezogen auf die Menge des Gemisches aus Stufe (a) als 100 Gew.-%, zugegeben werden.

4. Verfahren nach einem der voranstehenden Ansprüche, wobei die Reaktionszeit vor Stufe (c) 5 h bis 10 h beträgt.

5. Verfahren nach einem der voranstehenden Ansprüche, wobei das Gemisch aus flüssiger Hefe mit lebenden Zellen und pflanzlichen Ölen in Stufe (c) in einer Menge von 4 Gew.-% bis 19 Gew.-%, bezogen auf die Gesamtmenge des in Stufe (b) erhaltenen Gemisches als 100 Gew.-%, zugesetzt wird.

6. Verfahren nach einem der voranstehenden Ansprüche, wobei in Stufe (d) auf eine Restfeuchte von 4 % bis 12 % getrocknet wird.

7. Verfahren nach einem der voranstehenden Ansprüche, wobei die gekapselte Vitaminmischung in Stufe (e) in einer Menge von 3 Gew.-% bis 5 Gew.-%, bezogen auf die Gesamtmenge des in Stufe (d) erhaltenen Gemisches als 100 Gew.-%, zugegeben wird.

8. Verfahren nach einem der voranstehenden Ansprüche, wobei die Lösung in Stufe (f) in einer Menge von 0,5 bis 2 Gew.-%, bezogen auf die Gesamtmenge des in Stufe (e) erhaltenen Gemisches als 100 Gew.-%, auf das in Stufe (e) erhaltene Gemisch aufgesprüht wird.

9. Verfahren nach einem der voranstehenden Ansprüche, wobei die in Stufe (f) eingesetzte Lösung 10 Gew.-% bis 25 Gew.-% natürliche Aromen; 20 Gew.-% bis 35 Gew.-% lebende Bakterien; 5 Gew.-% bis 20 Gew.-% Enzyme; 15 Gew.-% bis 35 Gew.-% Weizenkeimöl; 8 Gew.-% bis 15 Gew.-% Emulgator, jeweils bezogen auf die Gesamtmenge der speziellen Lösung als 100 Gew.-%, umfasst.

10. Verfahren nach einem der voranstehenden Ansprüche, wobei das Produkt im Verlauf der Stufe (d) in die gewünschte Form gebracht und/oder sterilisiert wird.

11. Verfahren nach einem der voranstehenden Ansprüche, wobei das Konzentrat in Pulver-, Flocken-, Pellet-, Granulatform oder in Form von eines zähflüssigen Sirups erhalten wird.

12. Für Menschen und Tiere geeignetes, Vitamine, Mineralien und Spurenelemente enthaltendes Konzentrat, das durch ein Verfahren nach einem der Ansprüche 1 bis 11 erhalten worden ist.

13. Verwendung eines für Menschen und Tiere geeigneten, Vitamine, Mineralien und Spurenelemente enthaltenden Konzentrats, das durch ein Verfahren nach einem der Ansprüche 1 bis 11 erhalten worden ist, als Nahrungs- oder Futtermittel oder Ergänzungszusatz dafür.
